# EUROPEAN PATENT APPLICATION

(11) **EP 3 975 355 A1**
(43) Date of publication of application: **30.03.2022**
(21) Application number: 21199849.7
(22) Date of filing: 29.09.2021
(51) Int. Cl.: H02B 11/28, H01H 31/10, H02B 11/10, H02B 11/133

(54) **EARTHING SWITCH INTERLOCK ARRANGEMENT**

(30) Priority: 29.09.2020 IN 202041042243
(71) Applicant: Siemens Aktiengesellschaft, 80333 München (DE)
(72) Inventor: SHINDE, Deepak, 422101 Nashik, Maharashtra (IN); BURHADE, Sandeep, 421004 Thane, Maharashtra (IN); DAHIPHALE, Krishna, 400601 Thane west, Maharashtra (IN)
(74) Representative: Patentanwaltskanzlei WILHELM & BECK

(57) **Abstract**

A switching device (300) having a cable compartment (301) and an interlock arrangement (200) is provided. The interlock arrangement (200) is at least partially mountable within the cable compartment (301)and includes an electromagnetic unit (201), a lever (202) operably connected to the electromagnetic unit (201), and a shutter flap (203) operably connected to the lever (202). The lever (202) pivotably moves between a first position and a second position when the electromagnetic unit (201) is energized and de-energized. The shutter flap (203) slides over a handle receiving space (205) defined within a shaft (208) operably connected to an earthing switch of the switching device (300). The shutter flap (203) opens and closes the handle receiving space (205) corresponding to the first position and the second position of the lever (202).

## Description

The present disclosure relates to switching devices. More particularly, the present disclosure relates to an air insulated switching device that enhances safety of operating a manual disconnecting switch or a manual earthing switch which is opened and closed by inserting a handle therein.

Typically, for the safety of an operator operating on the switchgear for service and maintenance, there is a requirement of an earthing switch. When isolating any of the feeders for maintenance, the feeder must be earthed by closing the earthing switch to discharge any static charge carried by feeder. Earthing switches are mounted separately in cable compartment of the switchgears. To open or close an earthing switch, a drive mechanism also referred to as an interlock mechanism is typically provided. The interlock mechanism has a solenoid that operates a shutter flap for allowing handle insertion and operates an ON-OFF indication for the earthing switch. The operator must operate only when the circuit breaker in the switchgear is at TEST position.

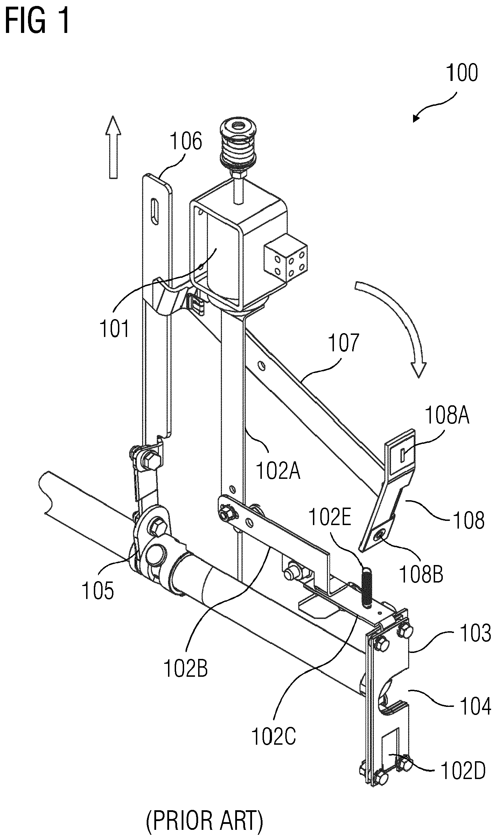

Conventionally, the aforementioned interlock mechanism is provided in a switchgear between a disconnecting switch and an earthing switch or between a circuit breaker connected on the same circuit thereof for ensuring safety of an operator operating the switchgear. Such an interlock mechanism is required to be simple, easy to operate and highly reliable and fail safe. FIG 1 illustrates a perspective view of an earthing switch interlock arrangement 100 according to the state of the art. The interlock arrangement 100 opens and closes a handle receiving space 104 on a shutter 103, through which a handle (not shown) can be inserted for mechanically earthing the switchgear. As shown in FIG 1, the handle receiving space 104 is opened and closed via a four-bar mechanism comprising levers 102A, 102B, 102C and 102D operably connected with one another. The levers 102A-102D are displaceable upon energizing of a solenoid 101 which is normally in a de-energized state. For example, upon energizing the solenoid 101, the lever 102A operably connected thereto moves in a downward direction consequently causing a downward movement of the levers 102B, 102C and 102D respectively. This causes the handle receiving space 104 to open and allow an operator to insert the handle therethrough. The operator upon insertion of the handle, rotates it for turning the earthing switch ON. The lever 102D is positioned in parallel with the shutter 103 and is designed of a shape that allows it to overlap with the handle receiving space 104 so as to open and close the handle receiving space 104 based on the position of the lever 102D.

However, the four-bar mechanism provided by the levers 102A-102D involves multiple moving parts, one or more lever springs 102E and multiple fastening members such as bolts required for connecting multiple moving parts. The lever spring 102E may get damaged with increased number of operations and can fail to open and close the handle receiving space 104 of the shutter 103 effectively.

Moreover, the interlock arrangement 100 also allows for the earthing switch position indication to be shown to the operator. For example, once the handle is inserted into the handle receiving space 104 and turned for switching the earthing switch ON, a coupling lever 105 turns therealong pushing a vertical connecting lever 106 upward and an indication lever 107 downward as shown by the arrows in the FIG 1. The indication lever 107 remains in the downward position as a result of gravity thereby, making an upper part 108A of the indicator 108 visible through a door of the switchgear providing an indication "I" to the operator that means the earthing switch is turned ON. The lower part 108B of the indicator 108 has an indication "O" indicating that the earthing switch is turned OFF. This indication mechanism of the interlock arrangement 100 also comprises multiple linkage parts and relies on gravity for its functioning. Therefore, it is subject to malfunction and operational errors thus, compromising the safety of the operator working on the switchgear.

Accordingly, it is an object of the present invention, to provide a switching device comprising an interlock arrangement that is safe and reliable in operation and decreases overall cost and complexity.

The switching device disclosed herein achieves the aforementioned object in that, the interlock arrangement at least partially mountable inside a cable compartment of the switching device includes an electromagnetic unit, a lever and a shutter flap operably connected with one another thereby, reducing number of overall components required whilst ensuring reliability of operation. The switching device is an air insulated switchgear having a voltage rating of up to 36 kilovolts. As used herein, "electromagnetic unit" refers to a device that converts electrical energy into mechanical energy thereby, producing linear motion, for example, a linear solenoid actuator. Advantageously, the electromagnetic unit is a solenoid physically disposed in a horizontal configuration, that is, orthogonal to a high voltage door of the switching device and therefore, orthogonal with respect to the shutter flap.

The lever pivotably moves between a first position and a second position when the electromagnetic unit is energized and de-energized. Advantageously, the lever is configured as a cam member rigidly connected at a first point of connection to the cable compartment such as a side wall, flexibly connected at a second point of connection to the electromagnetic unit, and flexibly connected at a third point of connection to the shutter flap so as to pivot about the first point of connection. According to this aspect, the lever is configured as a see-saw lever that pivots about a fixed point, that is, the first point of connection as a result of energizing and de-energizing of the electromagnetic unit, thereby, causing movement of the shutter flap.

The shutter flap is configured to slide over a handle receiving space defined within a shaft operably connected to an earthing switch of the switching device. The shutter flap opens and closes the handle receiving space corresponding to the first position and the second position of the lever. For example, when the lever is in the first position, that is upon energizing of the electromagnetic unit, the shutter flap moves linearly upwards and opens the handle receiving space and when the lever is in the second position, that is upon de-energizing of the electromagnetic unit, the shutter flap moves linearly downwards and closes the handle receiving space.

The interlock arrangement also includes a coupling lever rigidly mounted on the shaft such that the coupling lever is displaceable along with a movement of the shaft. For example, when the lever is in its first position and the shutter flap has opened the handle receiving space, an operator may insert a handle therein and rotate the handle in a clockwise direction. With this rotation, the shaft rotates axially, and the coupling lever mounted on the shaft rotates there-along. The interlock arrangement also includes an indication lever flexibly connected to the coupling lever such that a rotary motion of the coupling lever causes a linear motion of the indication lever, that is, upwards and downwards. According to one aspect, the indication lever is fixedly connected to an indicator head. According to another aspect, the indication lever terminates into an indicator head. Advantageously, the indicator head comprises indications, for example ON and OFF, marked thereon indicating a position of an earthing switch of the switching device. Advantageously, the handle receiving space, the shutter flap when covering the handle receiving space, and the indications of the indicator head are visible and/or accessible to the operator operating the switching device. Thus, the operator knows when the handle has been turned enough so as to switch the earthing switch ON or OFF.

Advantageously, the interlock arrangement by default assumes a position wherein the earthing switch is OFF, that is, the electromagnetic unit is in its de-energized state, the lever in its second position and the shutter flap slid downwards so as to cover or close the handle receiving space. However, when there is a requirement to operate on the switchgear, the interlock arrangement receives an electrical signal from the operator, for example, via a push button on the panel and energizes the electromagnetic unit thereby, causing the lever to pivot to its first position and the shutter flap to move upwards, opening the handle receiving space. Upon insertion of the handle into the handle receiving space and turning it in a clock-wise direction, the interlock arrangement via the coupling lever and the indication lever guides the operator to turn it until the earthing switch is turned ON, that is, the switchgear is completely earthed and it is safe for the operator to access one or more compartments of the switchgear.

The interlock arrangement disclosed herein thus, is a reliable arrangement with optimal number of components making it cost effective, less complex and accurate in its operation. Moreover, the earthing switch position indication mechanism of the interlock arrangement is sophisticated compared to those available in state of the art and is independent of gravity thereby, making it malfunction proof and reliable for performing service and maintenance operations on the switchgear.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a perspective view of an earthing switch interlock arrangement, according to the state of the art;
- FIG 2: illustrates a perspective view of an earthing switch interlock arrangement, according to an embodiment of the present disclosure; and
- FIG 3: illustrates a perspective view of a switchgear having the interlock arrangement shown in FIG 2 .

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

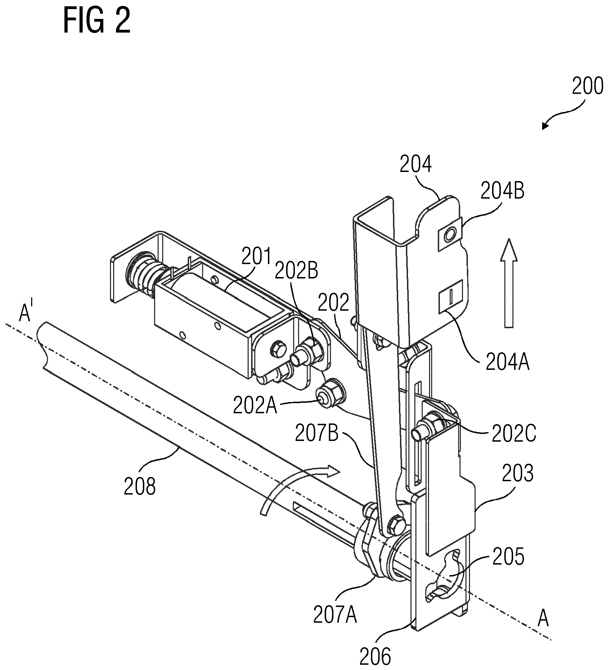

FIG 2 illustrates a perspective view of an earthing switch interlock arrangement 200, according to an embodiment of the present disclosure. The interlock arrangement 200 comprises an electromagnetic unit, for example, a solenoid 201 operably connected to a lever 202 which in turn is operably connected to a shutter flap 203. The lever 202 pivotably moves between a first position and a second position when the solenoid 201 is energized and de-energized. The lever 202 as shown in FIG 2 is designed as a cam member rigidly connected at a first point of connection 202A to the cable compartment such as a side wall of the cable compartment, flexibly connected at a second point of connection 202B to the solenoid 201, and flexibly connected at a third point of connection 202C to the shutter flap 203 so as to pivot about the first point of connection 202A.

When the circuit breaker (not shown) is in TEST position, the solenoid 201 is energized, which causes the lever 202 to pivot and move to its first position, that is, upwards which in turn causes the shutter flap 203 to move upwards thereby, opening a handle receiving space 205. After opening of the shutter flap 203, an earthing switch handle (not shown) is inserted into the handle receiving space 205 and rotated in a clockwise direction until the handle stops and turns ON the earthing switch (not shown).

The interlock arrangement 200 also comprises a coupling lever 207A mounted on a hollow shaft 208 one end of which defines the handle receiving space 205. The hollow shaft 208 terminates into a cover plate 206 onto which the handle receiving space 205 is defined. When a handle is inserted into the handle receiving space 205 and turned, the shaft 208 rotates along and axis A-A' causing the coupling lever 207A to rotate with the shaft 208. The coupling lever 207A is operably connected to an indication lever 207B such that the rotary movement of the coupling lever 207A causes a lateral upward or downward movement of the indication lever 207B based on the direction of rotation of the coupling lever 207A. For example, a clockwise rotation of the shaft 208 and therefore, the coupling lever 207A along the axis A-A', causes an upward movement of the indication lever 207B. The indication lever 207B is operably connected to an indicator 204. The indicator 204 has indications 204A and 204B showing "I" and "O" representations for an ON and OFF position of the earthing switch respectively. An upward motion of the indication lever 207B causes the indicator 204 to move there-along thus, showing the "I" indication to an operator. It will be understood by a person skilled in the art that the handle receiving space 205 and the indications 204A and 204B of the indicator 204, are accessible and visible to the operator through the high voltage door (not shown) of the switchgear.

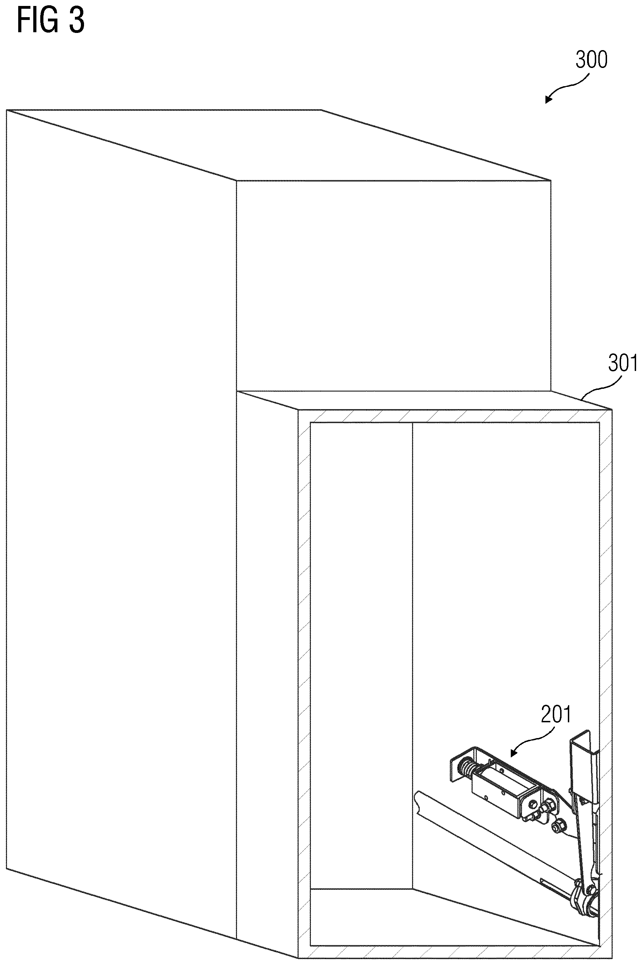

FIG 3 illustrates a perspective part sectional view of a switchgear 300 such as an air insulated switchgear having the interlock arrangement 200 shown in FIG 2. The switchgear 300 comprises a cable compartment 301 within which the interlock arrangement 200 is positioned. The interlock arrangement 200 is fixedly mounted on one of the side walls of the cable compartment 301 such that the indications 204A and 204B of the indicator 204, the shutter flap 203 and the handle receiving space 205 are accessible and visible through the high voltage door (not shown) of the switchgear 300 based on various positions of the interlock arrangement 200.

It will be understood by a person skilled in the art, that the interlock arrangement 200 shown in FIG 3 is connected to other components (not shown) within and/or outside the cable compartment 301 of the switchgear 300. For example, the shaft 208 is operably connected to the earthing switch (not shown) which enables turning ON and OFF of the earthing switch.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A switching device (300) comprising:
- a cable compartment (301); **characterized by**:
- an interlock arrangement (200) at least partially mountable within the cable compartment (301); the interlock arrangement (200) comprising:
o an electromagnetic unit (201);
o a lever (202) operably connected to the electromagnetic unit (201) and configured to pivotably move between a first position and a second position when the electromagnetic unit (201) is energized and de-energized; and
o a shutter flap (203) operably connected to the lever (202) and configured to slide over a handle receiving space (205) defined within a shaft (208) operably connected to an earthing switch of the switching device (300), for opening and closing the handle receiving space (205) corresponding to the first position and the second position of the lever (202) .

2. The switching device (300) according to claim 1, wherein the lever (202) is rigidly connected at a first point of connection (202A) to the cable compartment (301), flexibly connected at a second point of connection (202B) to the electromagnetic unit (201), and flexibly connected at a third point of connection (202C) to the shutter flap (203) so as to pivot about the first point of connection (202A).

3. The switching device (300) according to claim 1, wherein the lever (202) when in the first position causes the shutter flap (203) to move linearly and open the handle receiving space (205).

4. The switching device (300) according to any one of the claims 1 and 3, wherein the lever (202) when in the second position causes the shutter flap (203) to move linearly and close the handle receiving space (205).

5. The switching device (300) according to claim 1, wherein the interlock arrangement (200) comprises a coupling lever (207A) rigidly mounted on the shaft (208) such that the coupling lever (207A) is displaceable along with a movement of the shaft (208).

6. The switching device (300) according to claim 5, wherein the interlock arrangement (200) comprises an indication lever (207B) flexibly connected to the coupling lever (207A) such that a rotary motion of the coupling lever (207A) causes a linear motion of the indication lever (207B) .

7. The switching device (300) according to claim 6, wherein the indication lever (207B) is fixedly connected to an indicator head (204) comprising indications (204A, 204B) thereon indicating a position of an earthing switch of the switching device (300).

8. The switching device (300) according to claim 1, wherein the electromagnetic unit (201) is a solenoid disposed orthogonally with respect to the shutter flap (203).

9. The switching device (100) according to any one of the previous claims, is an air-insulated switchgear.

10. An interlock arrangement (200) at least partially mountable within a cable compartment (301) of a switching device (300); the interlock arrangement (200) **characterized by**:
- an electromagnetic unit (201);
- a lever (202) operably connected to the electromagnetic unit (201) and configured to pivotably move between a first position and a second position when the electromagnetic unit (201) is energized and de-energized; and
- a shutter flap (203) operably connected to the lever (202) and configured to slide over a handle receiving space (205) defined within a shaft (208) operably connected to an earthing switch of the switching device (300), for opening and closing the handle receiving space (205) corresponding to the first position and the second position of the lever (202).

11. The interlock arrangement (200) according to claim 10, wherein the lever (202) is rigidly connected at a first point of connection (202A) to the cable compartment (301), flexibly connected at a second point of connection (202B) to the electromagnetic unit (201), and flexibly connected at a third point of connection (202C) to the shutter flap (203) so as to pivot about the first point of connection (202A) .

12. The interlock arrangement (200) according to claim 10, wherein the lever (202) when in the first position causes the shutter flap (203) to move linearly and open the handle receiving space (205).

13. The interlock arrangement (200) according to any one of the claims 10 and 12, wherein the lever (202) when in the second position causes the shutter flap (203) to move linearly and close the handle receiving space (205).

14. The interlock arrangement (200) according to claim 10, wherein the interlock arrangement (200) comprises a coupling lever (207A) rigidly mounted on the shaft (208) such that the coupling lever (207A) is displaceable along with a movement of the shaft (208).

15. The interlock arrangement (200) according to claim 14, wherein the interlock arrangement (200) comprises an indication lever (207B) flexibly connected to the coupling lever (207A) such that a rotary motion of the coupling lever (207A) causes a linear motion of the indication lever (207B), and wherein the indication lever (207B) is fixedly connected to an indicator head (204) comprising indications (204A, 204B) thereon indicating a position of an earthing switch of the switching device (300).
